# EUROPÄISCHE PATENTSCHRIFT

(11) **EP 0 886 468 B1**
(45) Veröffentlichungstag und Bekanntmachung des Hinweises auf die Patenterteilung: **12.01.2000**
(21) Anmeldenummer: 97919264.8
(22) Anmeldetag: 12.03.1997
(51) Int. Cl.: A01L 7/02, A01L 7/00, A01L 7/04

(54) **BESCHLAGSYSTEM ZUM REDUZIEREN VON PRELLUNGEN BEI PFERDEHUFEN**
SHOEING SYSTEM FOR REDUCING SHOCK IN HORSES' HOOVES
SYSTEME DE FERRAGE POUR REDUIRE LES CHOCS DANS LES SABOTS DES CHEVAUX

(30) Priorität: 14.03.1996 DE 29604676 U; 13.11.1996 DE 29614112 U
(43) Veröffentlichungstag der Anmeldung: 30.12.1998
(73) Patentinhaber: Luber, Josef, 92224 Amberg (DE)
(72) Erfinder: Luber, Josef, 92224 Amberg (DE)
(74) Vertreter: Wasmeier, Alfons, Dipl.-Ing.
(86) Internationale Anmeldenummer: DE9700472
(87) Internationale Veröffentlichungsnummer: WO9733468

(56) Entgegenhaltungen:
- AT-B- 393 932
- DE-A- 3 430 358
- DE-C- 41 393
- DE-C- 221 008
- US-A- 5 029 648
- US-A- 5 180 017
- US-A- 5 343 957

## Beschreibung

Die Neuerung betrifft ein Beschlagsystem nach dem Oberbegriff des Anspruches 1.

Pferdebeine, insbesondere von Reit- und Springpferden sind im Hufbereich extrem empfindlich und verletzungsanfällig. Da die Sprunggelenke in der Hauptsache aus Horn, Knochen und Sehnen bestehen und wenig Muskelmasse aufweisen, werden sie beim Laufen und Springen sehr hohen Beanspruchungen in Form von Vibrationen, Schlägen und Stoßkräften ausgesetzt. Beim Pferdehuf findet eine Bewegung im Huf statt, die als Hufmechanismus bezeichnet wird. Mit normalen Hufeinlagen wird diese Bewegung gebremst. Ohne Hufeinlagen findet sie direkt zwischen Huf und Hufeisen statt. Dies hat zur Folge, daß sich der Huf im Bereich der Trachte abschmirgelt, was zu Fehlstellungen führt.

In der Regel werden die Pferdehufe mit Hufeisen beschlagen, die aufgenagelt werden. Es gibt ferner sog. orthopädische Hufbeschläge, bei denen eine Leder- oder Kunststoffplatte zwischen Huf und Hufeisen eingenagelt wird. Um diese Platte bei Abnutzung zu ersetzen, muß die Nagelverbindung am Huf zerstört werden. Eine derartige Anordnung ist unhygienisch und fördert Erkrankungen am Huf, da eine Säuberung im Hufsohlenbereich nicht möglich ist.

Aus US-A-51 80 017 ist ein Beschlagsystem mit einem Hufeisen 14 bzw. Grundträger 14, einer auswechselbaren Hufeinlage 12 aus dämpfendem Material zwischen Huf 32 und Hufeisen 14, sowie einer festen Verbindung von Hufeisen 14 und Hufeinlage 12 mit dem Huf bekannt. Die Einlage 12 besteht aus einer dämpfenden Sohlenplatte 16 mit mehreren, mit dem Boden in Kontakt kommenden stollenförmigen Ansätzen 18, die von der Einlage 12 dem Huf abgewandt nach außen vorstehen und durch Öffnungen 20 im Hufeisen 14 hindurchgreifen. Hufeisen 14 und Hufeinlage 12 sind mit dem Huf 32 mittels Nägeln 42 durch Öffnungen 40, 32 in dem Hufeisen und der Hufeinlage hindurch angenagelt, so daß die Hufeinlage über die gesamte Hufeisenform mit dem Hufeisen und dem Huf fest verbunden ist und die Hufeinlage weder gegenüber dem Huf noch gegenüber dem Hufeisen eine Relativbewegung ausführen kann.

Aufgabe der Neuerung ist, ein Hufbeschlagssystem zu schaffen, das dem Pferd optimalen Komfort und den Pferdehufen ein hohes Maß an Dämpfung und Energieabsorption beim Auffußen bietet, einen perfekten Sitz und Halt gegen Verdrehen des Hufes sicherstellt und einen steuerbaren Trachtenmechanismus ohne Hornabrieb ergibt.

Gemäß der Neuerung wird dies mit den Merkmalen des Kennzeichens des Anspruches 1 erreicht. Weitere Ausgestaltungen der Neuerung sind Gegenstand der Unteransprüche.

Um den Huf vor Vibrationen und Schlägen zu schützen und den Hufsohlenbereich reinigen zu können, wird der Grundträger (das Hufeisen) in dämpfendes Material eingebettet. Die Lauffläche läßt sich auch von einem Nichtfachmann schnell an- und abmontieren. Vor dem Aufnageln des Grundträgers auf den Huf wird ein dünner Dämpfungsring aus elastischem Material, z.B. Gummi, Kunststoff oder dgl. in Form des Grundträgers, der den Sohlenbereich zugänglich läßt, eingenagelt. Damit liegt der Grundträger nicht direkt am Huf an. Der Dämpfungsring wirkt schwingungs- und stoßdämpfend. Da er der Form des Grundträgers angepaßt ist, also keine volle Platte darstellt, wie dies üblich ist, kann der Sohlenbereich gereinigt werden und der Huf kann 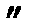 atmen". Desweiteren dient der Dämpfungsring dazu, geringere Unebenheiten zwischen Hufrand und Grundträger auszugleichen, so daß sowohl beim Heißbeschlagen als auch beim Kaltbeschlagen ein vollständiger Sitz gewährleistet ist.

Am Grundträger können gemäß der Neuerung Laufflächen angebracht werden, die je nach den Gegebenheiten, z.B. härterem oder weicherem Boden, beliebig wählbar sind. Eine derartige Lauffläche kann eine Kombination aus Stahl und Gummi sein, die die Schwingungen und Stöße zusätzlich dämpft. Der Stahlkern des Grundträgers kann von oben und unten in Dämpfungsmaterial eingebettet werden und ist dadurch gegenüber Schwingungen und Vibrationen isoliert. Dies hat den Vorteil, daß die erforderliche Stabilität des Stahls genutzt werden kann, ohne daß die Nachteile der Vibration in Kauf genommen werden müssen.

Durch verschiedene Profile unterschiedlicher Griffschärfe können variable Laufflächen erzielt werden. Mit den variablen Laufflächen läßt sich die 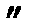 Spur" der Pferdebeine einstellen, wie dies z.B. beim Westernreiten erforderlich ist. Mit einer geschlossenen Lauffläche, die auf das Hufeisen aufgeschraubt wird, ist es möglich, durch horizontales Verdrehen am Hufeisen die Spureisen auf der Lauffläche mehr nach innen oder nach außen verlaufen zu lassen. Dies ergibt die Möglichkeit, die Spur der Pferdebeine auf die vorhandenen Bodenverhältnisse abzustimmen, ohne daß ein Hufschmid hinzugezogen werden muß. Die Spurveränderung kann durch Drehen der gesamten Laufplatte oder auch durch Verändern der beweglichen Spureisen vorgenommen werden.

Um die oben beschriebenen Fehlstellungen des Hufes zu vermeiden, wird nach der Neuerung in die Hufeinlage im Bereich der Trachte ein Gleitstück eingesetzt, das zum Hufeisen gerichtet ist und dessen Gleitfähigkeit höher ist als die der Hufeinlage. Dadurch wird der Hufmechanismus verbessert und der Hornabrieb entscheidend reduziert. Durch eine Wulst an der Innenseite wird die Hufeinlage fixiert, so daß eine Festlegung mit Hilfe von Nieten, Nägeln oder dgl. nicht erforderlich ist. Eine Wulst an der Hufeinlage verhindert, daß Schmutz und Boxendreck im Huf sich verdichten, so daß der Huf vor Fäulnis zwischen Hufsohle und Hufeisen geschützt ist. Eine derartige Wulst ist an der Hufeinlage innenliegend und den gesamten Umfang abdeckend sowie zum Huf hochstehend ausgebildet. Wird ein Druck auf die Wulst ausgeübt, preßt sie sich an den Huf an und schützt den Huf somit vor Ablagerungen zwischen Huf und Hufeisen. Desweiteren wird eine Verdichtung des Schmutzes im Huf vermindert.

Der Grundträger bzw. das Hufeisen besteht bei einer speziellen Ausführungsform der Neuerung aus Leichtmetall oder PVC, um das Gewicht zu verringern. An sich haben diese Materialien einen verhältnismäßig hohen Abrieb, so daß die Dicke des Hufeisens größer gewählt werden müßte. Um dies zu vermeiden, werden die Grundträger aus Leichtmetall oder PVC mit abriebfestem Material, z.B. V2a, Keramik, Werkzeugstahl, Hartmetail, versehen. Das Hufeisen bzw. der Grundträger weist eine Lauffläche mit einer Erhöhung auf, und der erhöhte Greifrand durchläuft den Außenteil des Grundträgers; im Nagelbereich liegt der Greifrand außerhalb der Nagellinie. Der Greifrand kann am Hufeisen eingegossen sein. Er kann als Stollenersatz dienen. Zur Erhöhung des Griffes werden die abriebfesten Teile vorstehend oder zur Verminderung eines starken Abriebes plan eingegossen. Die Abriebteile bestehen z.B. aus einem Stück und umfassen den gesamten Huf in Form eines Hufeisens; alternativ können sie aus mehreren kurzen Teilen, die um den gesamten Umfang des Hufeisens herum beabstandet angeordnet sind, bestehen. Um die Statik am Hufeisen zu verbessern, und zu verhindern, daß bei weichem Boden der Trachtenteil des Hufes zu tief in den Boden einsinkt, was eine Gefahr für den Beugesehnenapparat darstellt, werden die Grundträger im Bereich der Trachte ab dem dritten oder vierten Nagelloch zum Schenkelende hin verbreitert ausgeführt. Die Verbreiterung beträgt mindestens 5 mm. Damit wird auch erreicht, daß die Trachten bei der Bewegung des Trachtenmechanismus sich immer am Hufeisen bewegen und nicht darüber hinaus rutschen.

Nachstehend wird die Neuerung in Verbindung mit der Zeichnung anhand von Ausführungsbeispielen erläutert. Es zeigen:
- Fig. 1: eine Ausführungsform eines Beschlagsystems nach der Erfindung in auseinandergezogener Darstellung, in einer Ansicht von hinten,
- Fig. 1a: eine andere Ausführungsform eines Beschlagsystems nach der Erfindung in der der Fig. 1 entsprechenden Darstellung,
- Fig. 2: die Darstellung nach Fig. 1 in perspektivischer Seitenansicht,
- Fig. 2a: die Darstellung nach Fig. 1a in perspektivischer Seitenansicht,
- Fig. 3: einen Schnitt längs der Linie C-D der Fig. 1,
- Fig. 4: einen Schnitt längs der Linie A-B der Fig. 1,
- Fig. 5: einen Schnitt einer Variante der Fig. 4,
- Fig. 6: eine andere Ausführungsform eines Grundträgers mit Dämpfungseinlage,
- Fig. 7: in vergrößerter Darstellung einen Ausschnitt aus Fig. 6 mit Gieitstück in perspektivischer Darstellung,
- Fig. 8: einen Schnitt durch die Darstellung nach der Linie E-F der Fig. 6,
- Fig. 9: eine weitere Ausführungsform eines Grundträgers mit Dämpfungseinlage in perspektivischer Darstellung,
- Fig. 10: eine Detailansicht einer Wulstanordnung nach Fig. 9,
- Fig. 11: eine Detailansicht eines Gleitstückes nach Fig. 9 mit Dämpfungseinlage und Wulst,
- Fig. 12: einen Schnitt durch die Darstellung nach Fig. 9 längs der Linie G-H,
- Fig. 13: die Darstellung eines Gleitstückes in seitlicher und in Schnittansicht,
- Fig. 14: einen Schnitt durch eine Hufeinlage mit Gleitstück längs der Schnittlinie I-K,
- Fig. 15: eine Schnittansicht durch eine andere Ausbildung der Hufeinlage mit Gleitstück,
- Fig. 16: einen Ausschnitt aus einer weiteren Ausführungsform einer Hufeinlage mit Innenwulst,
- Fig. 17: längs der Linie N-O der Fig. 16,
- Fig. 18: eine Schnittansicht längs der Schnittlinie P-Q der Fig. 16,
- Fig. 19, 19a und 19b: verschiedene Ausführungsformen von Wulstanordnungen,
- Fig. 20: eine weitere Ausführungsform einer Hufeinlage nach der Erfindung,
- Fig. 21, 22: Darstellungen von Gleitstücken mit Fixierungsstift,
- Fig. 23, 24, 25: unterschiedliche Ausführungsformen von Hufeinlagen in Seitenansicht,
- Fig. 26: eine weitere Ausführungsform einer Hufeinlage mit Grundträger in Schrägansicht,
- Fig. 27: eine Schnittansicht der Anordnung nach Fig. 26 längs der Linie R-S der Fig. 26,
- Fig. 28: eine auswechselbare Lauffläche für die Anordnung nach Fig. 26,
- Fig. 29: vier verschiedene Profilformen der auswechselbaren Lauffläche nach Fig. 28 im Schnitt,
- Fig. 30: eine Aufsicht auf eine geschlossene Lauffläche,
- Fig. 31: eine Ansicht der Lauffläche nach Fig. 30 von hinten,
- Fig. 32: eine schematische Darstellung eines Hufes mit daran befestigter Lauffläche,
- Fig. 33: eine schematische, perspektivische Ansicht einer weiteren Ausführungsform einer Hufeinlage,
- Fig. 34: eine perspektivische Darstellung einer weiteren Ausführungsform eines Grundträgers,
- Fig. 35: eine Schnittansicht des Grundträgers nach Fig. 34 längs der Schnittlinie V-W,
- Fig. 36: eine Schnittansicht einer abgeänderten Ausführung der Fig. 34,
- Fig. 37: eine Aufsicht auf eine vollflächige Dämpfungseinlage, und
- Fig. 38: eine Endansicht der Darstellung nach Fig. 37.

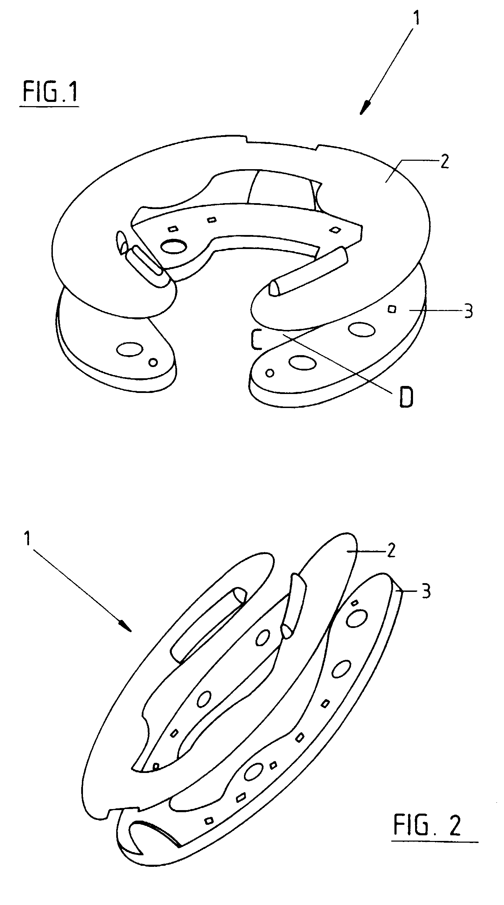

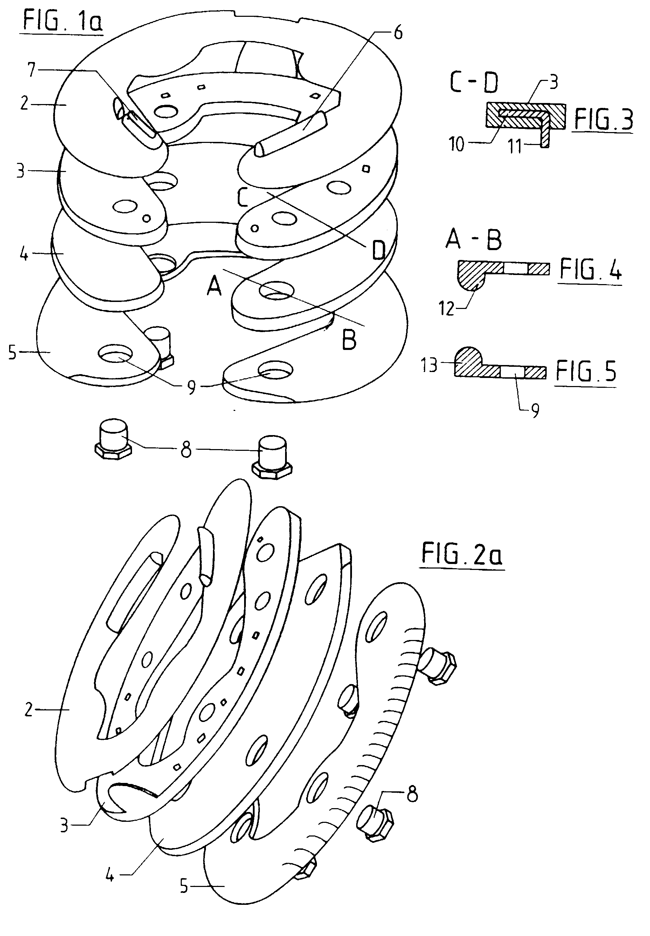

In den Figuren 1 und 2 besteht das Beschlagsystem 1 aus einer Dämpfungseinlage bzw. Hufeinlage 2 aus dämpfenden Material, z.B. Gummi, Kunststoff oder dgl.. Die Hufeinlage 2 ist in ein Hufeisen bzw. einen Grundkörper 3 eingelegt, so daß die Hufunterseite auf dem Hufeisen 3 unter Zwischenschaltung der Dämpfungseinlage 2 aufliegt. Bei der Aus-führung nach den Figuren 1a und 2a sind zusätzlich eine zweite Dämpfungseinlage 4, die auswechselbar und vorzugsweise geschlossen ausgebildet ist, und ein Profil-Greifeisen 5 mit offener, auswechselbarer Lauffläche vorgesehen, wobei das Profil-Greifeisen die Tritt-fläche des Beschlagsystems darstellt, die Bodenkontakt hat, und die zweite Dämpfungs-einlage 4 eine Dämpfung zwischen den beiden Eisen 3 und 5 ergibt. Die zweite Dämpfungseinlage ist vorzugsweise mit unterschiedlicher Farbgebung für unterschied-liche Verwendungs- bzw. Einsatzzwecke ausgebildet und kann auf der Außenseite bzw. Unterseite, die die Sichtseite beim Heben des Hufes ist, mit Markierungen, z.B. einem Logo und dgl. für Werbezwecke versehen sein.

Die Hufeinlage 2 weist Wulstabschnitte 6, 7 im Bereich betrachtet zu beiden Seiten der offenen Hufeisenenden (hinterer Teil des Eisens 3) auf, die an der Innenseite der Hufeinlage 2 als Ansatz noch oben vorstehend ausgebildet sind und den Huf nach innen stabilisieren, d.h. einen Druck auf den Huf nach innen und nach außen aufnehmen und begrenzen. Die Profil-Greifeisen 5 sind mittels Stollen 8, die in Bohrungen 9 der Greifeisen 5 eingeschraubt oder in entsprechender Weise festgelegt sind, durch die zweite Däm-pfungseinlage 4 hindurch mit dem Grundkörper 3 lösbar befestigt. Die Stollen geben dem Huf Halt beim Aufsetzen auf den Boden.

Im Grundträger 3 sind (Fig. 3) sind die Profile 11 als Abriebteile aus gleichem oder unterschiedlichem Material eingesetzt bzw. eingegossen (bei 10), die, wenn der Grundkörper 3 die unterste Seite des Beschlagsystems ist, dem Huf z.B. beim Springen und Laufen den notwendigen Halt geben und die die Aufgabe von Stollen erfüllen können.

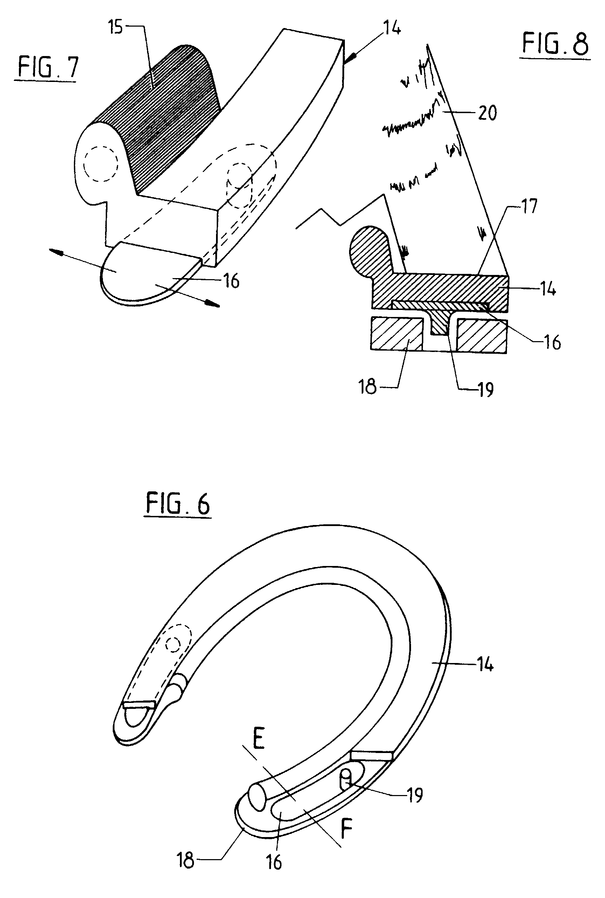

Figur 4 zeigt einen Schnitt durch die Dämpfungseinlage 4 mit nach unten gerichteter Innenwulst 12, Figur 5 einen Schnitt durch die Dämpfungseinlage 4 mit nach oben gerichteter Innenwulst 13.

In Figur 6 ist eine Hufeinlage 14 mit Trachtenmechanismus dargestellt, die eine Innenwulst 15 aufweist, welche einteilig ausgebildet ist. Die Wulst kann massiv oder hohl, z.B. schlauchartig, auf jeder Seite in einem einzigen Stück, unterbrochen, profiliert oder in ähnlicher Weise ausgebildet sein. Die Hufeinlage 14 weist an der Bodenfläche eine Aus-nehmung 17 auf, in die ein Gleitstück 16 aus Metall, Kunststoff oder ähnlichen abrieb-festem Material, das mittels Fixierstift 19 an dem darunterliegenden Hufeisen 18 festgelegt ist, eingesetzt ist. Der Huf 20 sitzt auf der Einlage 14 auf und wird durch die Wulst 15 an einer Seitwärtsbewegung nach innen gehindert. Das Gleitstück 16 ist im Bereich der Trachte vorgesehen. Es hat eine höhere Gleiteigenschaft als die der Hufeinlage, wodurch der Hufmechanismus gefördert und der Abrieb von Horn bei entsprechenden Beanspruchungen des Hufes stark reduziert wird.

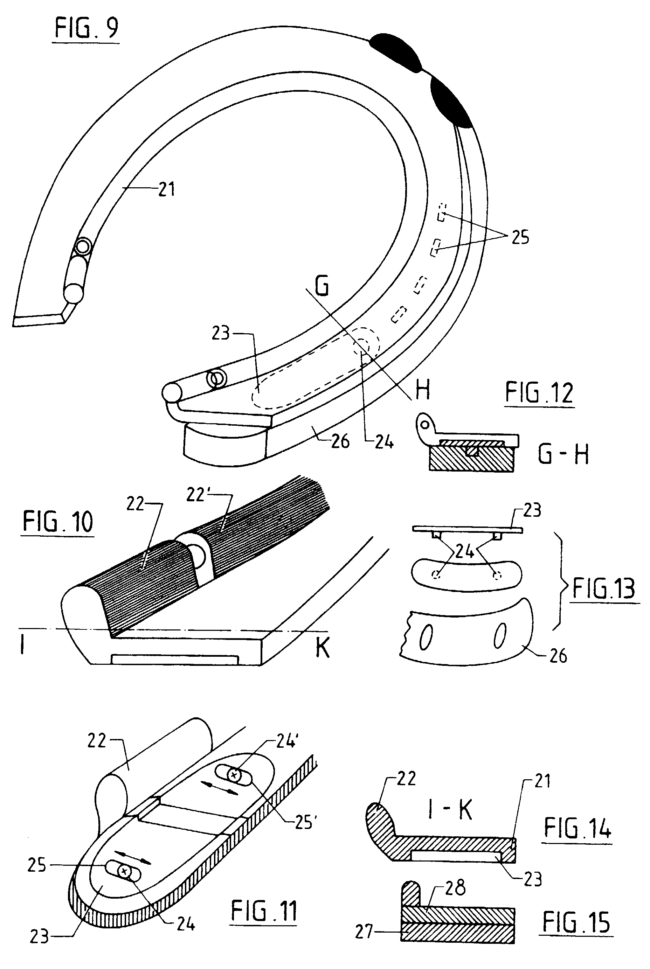

Die Hufeinlage 21 nach Figur 9 weist eine innenliegende, um den gesamten Umfang verlaufende Wulst 22 sowie ein in die Hufeinlage 21 eingesetztes Gleitstück 23 in den beiden hinteren Bereichen des Hufeisens auf. Das Gleitstück 23 ist durch mindestens einen Fixierstift 24 am Hufeisen 26 festgelegt. Mit 25 sind Nagelstellen bezeichnet, über die das Hufeisen 26 mit dem Gleitstück am Pferdehuf befestigt wird. Die Hufeinlage 21 ist, wie in Figur 10 dargestellt, mit der Innenwulst 22 einstückig ausgebildet, die massiv, oder-wie in der Zeichnung angedeutet hohl, z.B. schlauchartig (22') ausgebildet sein kann. In einer weiteren Ausführungsform nach Figur 11 ist das Gleitstück 23 mit zwei Fixierstiften 24, 24' mit dem Hufeisen 26 befestigt. Das Gleitstück 23 weist Ausnehmungen 25, 25', z.B. in Form von Langlöchern, auf, so daß das Gleitstück (23) in Pfeilrichtung relativ zum Hufeisen einstellbar und bei Beanspruchung des Hufes seitlich verschiebbar ist.

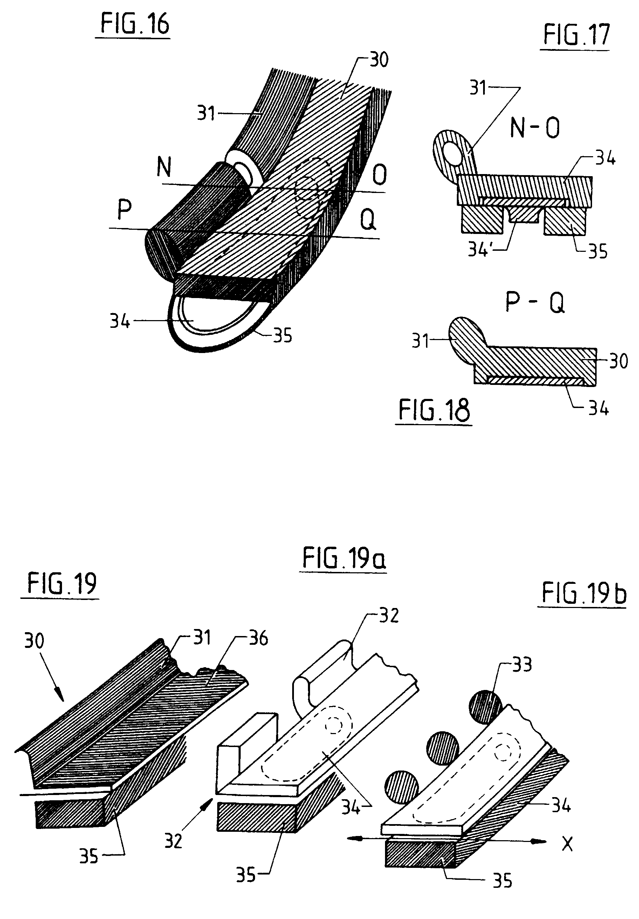

In den Figuren 12 - 15 sind verschiedene Querschnitte für die Hufeinlage mit Gleitstück dargestellt, wobei Figur 12 einen Schnitt längs der Linie G - H der Figur 9 zeigt. Figur 13 zeigt das Geitstück 23 mit zwei Fixierstiften 24, 24', die in entsprechenden Bohrungen bzw. Ausnehmungen des im Ausschnitt dargestellten Hufeisens 26 befestigt sind. Figur 14 zeigt einen Schnitt I - K durch die Hufeinlage 21 und die Wulst 22 mit Gleitstück 23. Die Figur 15 zeigt eine andere Ausführungsform einer Hufeinlage 27 mit Gleitstück 28, das die gleiche Breite wie die Hufeinlage hat und eine Fixierungswulst 29 aufweist. Die Darstellung nach Figur 15 zeigt einen Schnitt längs der Linie L - M. In den Figuren 16, 17, 18 und 19, 19a, 19b sind verschiedene Ausführungsformen von Wulstanordnungen einer Hufeinlage 30 dargestellt. Die Wulste 31 sind innenliegende Wulste der Hufeinlage in massiver Ausführung oder in schlauchartiger, d.h. hohler Ausführung. Die Wulst 32 ist als unterbrochene Wulst dargestellt, d.h. in Form von Einzelabschnitten 32, und die Wulst 33 besteht aus einzelnen, fingerartigen Elementen, die mit der Hufeinlage 30 ebenfalls einstückig hergestellt sind. Das Gleitstück ist jeweils mit 34 bezeichnet, das Hufeisen mit 35. Die Hufeinlage 30 nach Figur 17 mit einer schlauchförmigen Wulst 31 zeigt ein Gleitstück 34 mit Fixierungsstift 34', die Darstellungen nach Figur 18 eine Hufeinlage 13 mit massiver bzw. voller Wulst 31 und einem Cleitstück 34 ohne Fixierungsstift. In Figur 19 ist eine Hufeinlage 30 mit voller Wulst und einer Auflage 36 zum Einnageln gezeigt.

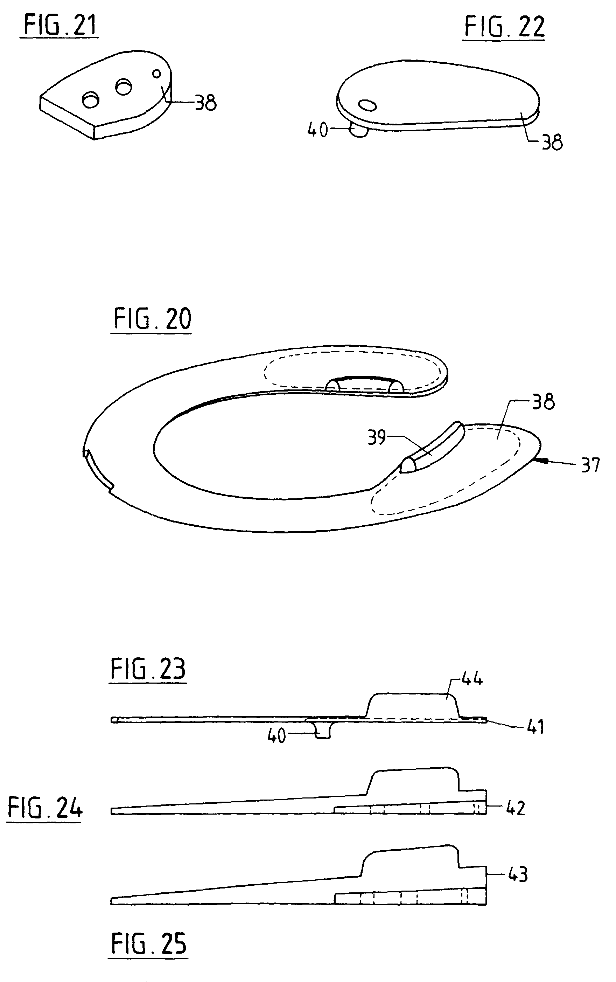

Die Figuren 20 - 25 zeigen Ausführungsformen eine Hufeinlage 37 mit Gleitstück 38 und Wulsten 39. Das Gleitstück 38 weist einen Fixierungsstift 40 am einen Befestigungsende am Huf bzw. Hufeisen auf, so daß die Gleitstücke jeweils um die Achse des Fixierstiftes 40 in der Hufeinlagenebene zusammen mit der Hufeinlage beweglich sind. Hierbei zeigen die Figuren 23, 24 und 25 Hufeinlagen mit kontinuierlicher Steigung von der Zehe zur Trachte des Hufes. Diese verschiedenen Ausführungsformen von Hufeinlagen sind mit 41, 42 und 43 bezeichnet, die als Keileinlagen ausgebildet sind. Sie können ein-stückig in Hufeisenform ausgebildet sein, aber auch zweiteilig, so daß die Hufeinlagen jeweils nur einen Schenkel eines Hufeisens darstellen, es sich also um eine geteilte Huf-einlage handelt, wobei beide Teile am vorderseitigen Ende mit dem Hufeisen verbunden werden. An den Keileinlagen 41, 42, 43 ist jeweils eine kurze innenliegende Wulst 44 ausgebildet. Die Keileinlage ist hierbei lediglich am hinteren Ende des Hufes angeordnet, die Hufeinlage kann jedoch auch als eine einteilige Hufeinlage in Hufeisenform als Keil-einlage ausgebildet sein.

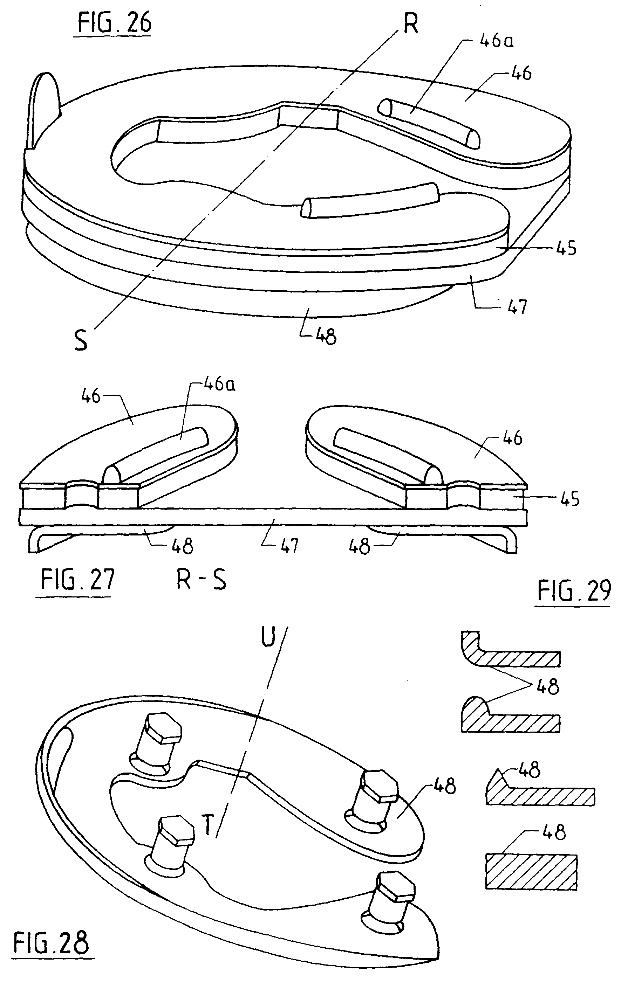

Die Figuren 26, 27, 28 und 29 zeigen Ausführungsformen eines Grundträgers bzw. Hufeisens 45 mit Hufeinlage 46 und innenliegender kurzer Wulst 46a in Verbindung mit einer auswechselbaren geschlossenen Gummi- oder Kunststoff-Platte 47 und einer auswechselbaren Lauffläche bzw. Greifeisen 48, die in Figur 2a als Profileisen 5 bezeichnet und dargestellt sind.

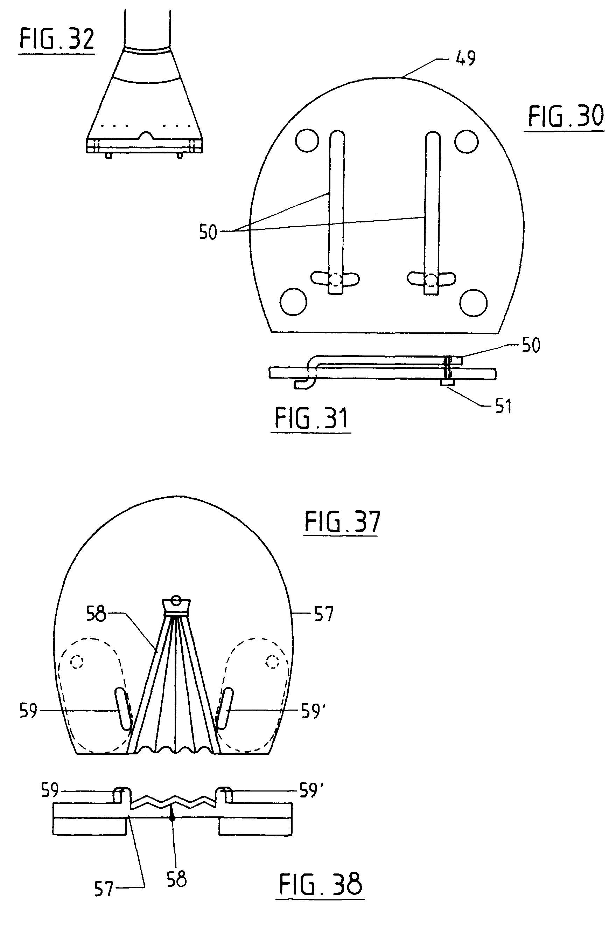

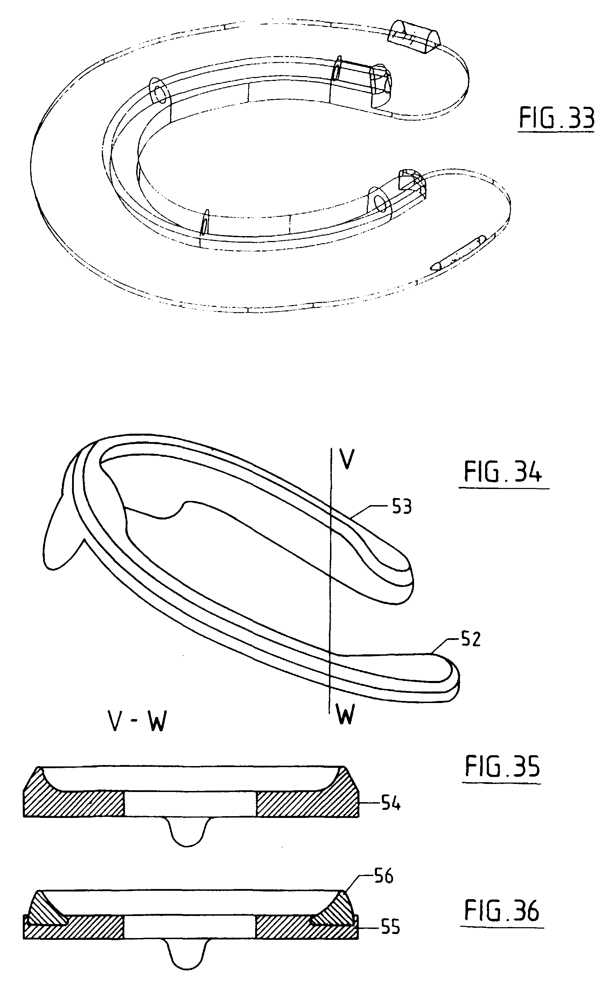

Die Figuren 30 - 32 zeigen eine geschlossene, auswechselbare Lauffläche 49 mit daran befestigten, also festsitzenden Spureisen 50, die mit Hilfe von Befestigungsschrauben 51 am Beschlagsystem befestigt sind. In der Darstellung nach Figur 31 sind die Spureisen beweglich bzw. verschiebbar im Winkel zueinander in Langlöchern beweglich angeordnet. Die Figur 33 zeigt eine Hufeinlage mit nach oben gerichteter Wulst an der Innenseite in Schlauchprofilform und mit Fixierungswulsten an der Außenseite. Die Hufeinlage weist im Trachtenbereich auf dem dem anderen Huf zugewandten Außenrand der Hufeinlage seitlich nach außen vorstehende, angeformte Ansätze, Noppen oder dgl. auf, die verhin-dern, daß beim Anschlagen des Hufeisens des einen Beines gegen das andere Bein eine Verletzung auftreten kann bzw. das Pferd gewarnt wird. Bei der Darstellung nach Figur 34 ist der Grundträger 53 mit verbreiterten Schenkelenden 52 und einem Greifrand ausge-bildet. Die Schnittdarstellung nach Figur 35 zeigt einen Grundträger 54 mit gegossenem Greifrand, der aus dem gleichen Material wie der Grundträger besteht. Die Ausführungs-form nach Figur 36 zeigt einen Grundträger 55 mit eingegossenem Greifrand 56 aus einem Material, das eine höhere Abriebfestigkeit als der Grundträger hat.

In weiterer Ausgestaltung der Anordnung nach Fig. 1 oder 2 kann die Hufeinlage nach den Fig. 37 und 38 anstatt als hufeisenförmige Dämpfungseinlage als vollflächige Einlage 57 ausgebildet sein, um das Eindringen von Schmutz oder dgl. an der Hufunterseite zu unterbinden. Damit die Einlage 57 analog der Dämpfungseinlage 2 z.B. nach Fig. 1 im hinteren Bereich auslen-ken kann, ist die vollflächige Einlage mittig mit einem fächerartigen, geschlossenen Faltenbereich 58 versehen, so daß die flächige Einlage sich bei Beanspruchung des Hufes im hinteren Bereich in der Ebene der flächigen Einlage strecken oder stauchen kann. Auf der Einlage sind Wulste 59, 59' vorgesehen, die in die Einlage integriert sind und die eine Seitwärtsbewegung des Hufes einerseits ermöglichen und andererseits begrenzen.

## Patentansprüche

1. Beschlagsystem (1) mit Hufeisen bzw. Grundträger (3; 18) und einer Hufeinlage (2; 14) aus einem dämpfenden Werkstoff, z.B. Gummi, Kunststoff oder dgl., zwischen Huf (20) und Hufeisen (3, 18), **dadurch gekennzeichnet**, daß die einteilig oder zweiteilig ausgebildete Hufeinlage (2; 14) im wesentlichen der Form des Hufeisens (3; 18) angepaßt und in Vorderbereich zwischen Huf und Hufeisen eingenagelt sowie im hinteren Bereich zusammen mit dem Huf relativ zum Hufeisen seitwärts beweglich ist.

2. System nach Anspruch 1, dadurch gekennzeichnet, daß am Trachtenende der Hufeinlage (3; 14) jeweils ein Gleitstück (16) zwischen Hufeinlage (14) und Hufeisen (18) vorgesehen ist, dessen Reibungskoeffizient kleiner, gleich oder größer ist als der der Hufeinlage (14), und unabhängig von dem Reibungskoeffizienten der Hufeinlage wählbar ist.

3. System nach Anspruch 1 oder 2, dadurch gekennzeichnet, daß die Hufeinlage (2; 18) auf der Innenseite im Trachtenbereich eine dem Huf (20) zugewandte Wulst bzw. Erhebung (6, 7; 15, 22) aufweist, die eine nach innen gerichtete Verschiebung der Hufeinlage (2; 18) relativ zum Hufeisen (3; 18) ermöglicht, eine nach außen gerichtete Verschiebung jedoch begrenzt.

4. System nach einem der Ansprüche 1 - 3, dadurch gekennzeichnet, daß die dem Huf (20) zugewandte Wulst (15) sich zumindest teilweise über den Hufumfang herum erstreckt.

5. System nach Anspruch 2, dadurch gekennzeichnet, daß das Gleitstück (16) die Hufeinlage (2; 18) im Trachtenbereich ganz oder teilflächig deckt und wahlweise mit der Hufeinlage fest, z.B. eingegossen, eingeklebt oder lösber, z.B. aufgesteckt verbunden ist.

6. System nach einem der Ansprüche 1 bis 5, durch gekennzeichnet, daß die Hufeinlage (2; 18) aus Gummi, PVC oder ähnlichen Material besteht und auswechselbar zwischen Hufeisen (3; 18) und Huffläche angeordnet ist.

7. System nach Anspruch 3 oder 4, dadurch gekennzeichnet, daß die Wulst (13; 22) ein Voll- oder Hohlprofil ist, auf der Innenseite des Hufes (20) anliegt, in Umfangsrichtung unterbrochen oder ununterbrochen ausgebildet ist, und von der Hufeinlage (2; 14) ausgehend nach oben zum Huf (20) angeordnet ist.

8. System nach Anspruch 3 oder 4, dadurch gekennzeichnet, daß die Wulst (12) ein Voll- oder Hohlprofil ist, auf der Innenseite des Hufes anliegt, in Umfangsrichtung unterbrochen oder ununterbrochen ausgebildet ist, und von der Hufeinlage ausgehend ganz oder in Teilen nach unten zur Lauffläche angeordnet ist.

9. System nach Anspruch 2 oder 5, dadurch gekennzeichnet, daß das Gleitstück (23) eine Fixiervorrichtung (24) aufweist, z.B. einen Rundstift, einen Rohraufsatz oder dergleichen, die in einer Ausnehmung (25) des Hufeisens (26) festlegbar ist.

10. System nach Anspruch 3, 4 oder 7, dadurch gekennzeichnet, daß die Hufeinlage (37) ausgespart ist und die Aussparung ein Gleitstück (38) gleicher Dicke wie die Hufeinlage aufnimmt.

11. System nach Anspruch 1 oder einem der folgenden, dadurch gekennzeichnet, daß die Hufeinlage (37) von der Hufzehe zur Trachte hin eine zunehmende Dickendimension in Form einer Keilhufeinlage (41, 42, 43) aufweist und den gesamten oder einen Teil des Hufumfangs abdeckt.

12. System nach Anspruch 1 oder einem der folgenden, dadurch gekennzeichnet, daß zusätzlich zur Hufeinlage (46) ein Greifeisen (48) vorgesehen ist, das an mehreren Befestigungspunkten am Hufeisen befestigbar ist.

13. System nach Anspruch 12, dadurch gekennzeichnet, daß das auswechselbare Greifeisen (48) ein erhöhtes Laufprofil aufweist, das unterbrochen oder ununterbrochen über den gesamten Umfang des Hufeisens (45) verläuft und zwischen Hufeisen (45) und Greifeisen (48) zur Aufnahme einer zweiten Dämpfungseinlage (47) ausgebildet ist.

14. System nach Anspruch 12 oder 13, dadurch gekennzeichnet, daß das auswechselbare Greifeisen (48) eine geschlossene Platte (49) ist, die mit erhöhten Spureisen (50) und mit Spurverstellmitteln (51) versehen ist.

15. System nach Anspruch 1 oder einem der folgenden, dadurch gekennzeichnet, daß das Hufeisen bzw. der Grundträger (54) aus Metall oder Leichtmetall besteht und Laufflächen mit einer Erhöhung (56) gegenüber dem Hufeisen aufweist, und daß der erhöhte Greifrand (56) des Grundträgers (55) den Außenteil des Grundträgers durchläuft und der Greifrand im Nagelbereich außerhalb der Nagellinie liegt.

16. System nach Anspruch 1 oder einem der folgenden, dadurch gekennzeichnet, daß die Hufeinlage (37) am Außenumfang nach oben oder nach unten vorstehende Fixieransätze (40) aufweist.

17. System nach Anspruch 14 oder 15, dadurch gekennzeichnet, daß der Grundträger 53) mit verbreiterten Schenkelenden (52) ausgebildet ist, und daß diese Hufeisenschenkel im Trachtenbereich eine Verbreiterung von mindestens 5 mm zur Normalbreite des Hufeisens im Zehenbereich aufweisen.

## Claims

1. Shoeing system (1) comprising a horse shoe or alternatively a base carrier (3; 18) and a shoe insert (2; 14) made of attenuating material, e.g. rubber, plastics or the like, between the hoof (20) and the horse shoe (3; 18), **characterised in** that the one-part or alternatively two-part shoe insert (2; 14) is substantially adapted to the shape of the horse shoe (3; 18), and in the front area is nailed between the hoof and the horse shoe, and is movable laterally relative to the horseshoe in the rear area together with the hoof.

2. System according to claim 1, characterised in that at the heel end of the shoe insert (3; 14) a gliding member (16) each is provided between the shoe insert (14) and the horse shoe (18), the friction coefficient of which is smaller, equal or larger than that of the shoe insert (14), and can be selected independent of the frictional coefficient of the shoe insert.

3. System according to claim 1 or 2, characterised in that the shoe insert (2; 18)is provided on the inner side at the heel area with a bead or elevation (6, 7; 15, 22) facing the hoof (20), which allows an inwardly directed movement of the shoe insert (2; 18) relative to the horse shoe (3; 18), however, restricts an outwardly directed movement.

4. System according to one of claims 1 - 3, characterised in that the bead or elevation (15) facing the hoof (20) extends at least partially around the periphery of the hoof.

5. System according to claim 2, characterised in that the gliding member (16) covers the shoe insert (2; 18) at the heel area completely or partially, and is firmly connected with the shoe insert, or is releasably connected by moulding or gluing, or is releasably connected, such as by being plugged-in.

6. System according to claim 1, characterised in that the shoe insert (2; 18) is made of rubber, PVC or similar material and is exchangeably arranged between the horse shoe (3; 18) and the contact surface.

7. System according to claim 3 or 4, characterised in that said bead or elevation (13; 22) is a solid or a hollow profile, contacts the inner side of the hoof (20), is interrupted or uninterrupted in the peripheral direction, and is arranged extending from the shoe insert (2; 14) upwards to the hoof (20).

8. System according to claim 3 or 4, characterised in that the bead or elevation (12) is a solid or hollow profile, contacts the inner side of the hoof, is interrupted or uninterrupted in the peripheral direction, and is arranged starting from the shoe insert completely or in part downwardly to the contact surface.

9. System according to claim 2 or 5, characterised in that the gliding member (23) has a fixing means (24), such as a rounded pin, a tube-like element or the like, which can be fastened to a recess (25) of the horse shoe (26).

10. System according to claim 3, 4 or 7, characterised in that the shoe insert (37) is recessed and the recess receives a gliding member (38) of the same thickness as the shoe insert.

11. System according to claim 1 or one of the following, characterised in that the shoe insert (37) is provided with an increasing thickness dimension in the form of a wedge shoe insert (41,42,43) increasing from the hoof toe to the heel, the shoe insert covering the entire or part of the hoof periphery.

12. System according to claim 1 or one of the following, characterised in that in addition to the shoe insert (46) a gripping iron (48) is provided which is fastened to the horse shoe at several mounting positions.

13. System according to claim 12, characterised in that the exchangable gripping iron (48) is provided with an increased tracking profile which extends interrupted or uninterrupted over the entire periphery of the horse shoe (45) and is formed between the horse shoe (45) and the gripping iron (48) for receiving a second attenuation insert (47).

14. System according to claim 12 or 13, characterised in that the exchangeable gripping iron (48) is a closed-surface plate (49) which is provided with an increased tracking iron (50) and with track adjustment means (51).

15. System according to claim 1 or one of the following, characterised in that the horse shoe resp. the base carrier (54) is made of metal or light-weight metal, and the contact surface is provided with an elevation (56) in view of the horse shoe, and that the elevated gripping rim (56) of the base carrier (55) extends through the outer portion of the base carrier and the gripping rim is within the nail area outside of the nailing line.

16. System according to claim 1 or one of the following, characterised in that the shoe insert (37) at the outer periphery is provided with upwardly or downwardly extending fixing lugs (40).

17. System according to claim 14 or 15, characterised in that the base carrier (53) is provided with widened leg ends (52), and that the horse shoe legs in the heel area have a widening of at least 5 mm in view of the normal width of the horse shoe within the toe area.

## Revendications

1. Système de ferrure (1) comprenant un fer à cheval ou support de base (3; 8) et une pièce de sabot (2; 14) constituée d'un matériau d' amortissement, par exemple du caoutchouc, une matière plastique ou analogue, entre le sabot (20) et le fer à cheval (3; 18), caractérisé en ce que la pièce de sabot (2; 14) conformée en une ou en deux parties est ajustée en substance sur la forme du fer à cheval (3; 18), est clouée dans la zone avant entre le sabot et le fer à cheval et peut se déplacer latéralement dans la zone arrière conjointement avec le sabot par rapport au fer à cheval.

2. Système selon la revendication 1, caractérisé en ce qu'il est prévu sur l'extrémité d'appui de la pièce de sabot (3; 14) respectivement une pièce glissante (16) entre la pièce de sabot (14) et le fer à cheval (18), dont le coefficient de frottement est inférieur, égal ou supérieur à celui de la pièce de sabot (14) et peut être choisi indépendamment du coefficient de frottement de la pièce de sabot.

3. Système selon la revendication 1 ou 2, caractérisé en ce que la pièce de sabot (2; 18) présente, sur le côté intérieur, dans la zone d'appui, un bourrelet ou un renflement (6, 7; 15, 22) tourné vers le sabot (20), qui permet un déplacement, dirigé vers l'intérieur, de la pièce de sabot (2; 18) par rapport au fer à cheval (3; 18), mais limite un déplacement dirigé vers l'extérieur.

4. Système selon l'une quelconque des revendications 1 à 3, caractérisé en ce que le bourrelet (15) tourné vers le sabot (20) s'étend au moins en partie sur la périphérie du sabot.

5. Système selon la revendication 2, caractérisé en ce que la pièce glissante (16) recouvre complètement ou partiellement la pièce de sabot (2; 18) dans la zone d'appui et est au choix fixée à la pièce de sabot, par exemple coulée d'une seule pièce ou collée d'une seule pièce, ou emboîtée de manière amovible.

6. Système selon l'une quelconque des revendications 1 à 5, caractérisé en ce que la pièce de sabot (2; 18) est constituée de caoutchouc, de PVC ou d'un matériau similaire et est agencée de manière interchangeable entre le fer à cheval (3; 18) et la surface du sabot.

7. Système selon la revendication 3 ou 4, caractérisé en ce que le bourrelet (13; 22) est un profilé plein ou creux, s'applique sur le côté intérieur du sabot (20), est disposé de manière interrompue ou ininterrompue dans la direction périphérique et est agencé à partir de la pièce de sabot (2; 14) vers le haut en direction du sabot (20).

8. Système selon la revendication 3 ou 4, caractérisé en ce que le bourrelet (12) est un profilé plein ou creux, s'applique sur le côté intérieur du sabot (20), est disposé de manière interrompue ou ininterrompue dans la direction périphérique et est agencé à partir de la pièce de sabot complètement ou en partie vers le bas en direction de la surface d'usure.

9. Système selon la revendication 2 ou 5, caractérisé en ce que la pièce glissante (23) présente un dispositif de fixation (24), par exemple une broche ronde, une pièce rapportée creuse ou analogue, qui peut être fixée dans un évidement (25) du fer à cheval (26).

10. Système selon la revendication 3, 4 ou 5, caractérisé en ce que la pièce de sabot (37) est évidée et l'évidement reçoit une pièce glissante (38) de même épaisseur que la pièce de sabot.

11. Système selon la revendication 1 ou l'une des revendications suivantes, caractérisé en ce que la pièce de sabot (37) présente, de la pointe du sabot à l'appui, une épaisseur croissante sous la forme d'une pièce de sabot de calage (41, 42, 43) et recouvre en totalité ou en partie la périphérie du sabot.

12. Système selon la revendication 1 ou l'une des revendications suivantes, caractérisé en ce qu'il est prévu, en plus de la pièce de sabot (46), un fer à griffes (48) qui peut être fixé au fer à cheval sur plusieurs points de fixation.

13. Système selon la revendication 12, caractérisé en ce que le fer à griffes interchangeable (48) présente un profil d'usure renflé qui s'étend de manière interrompue ou ininterrompue sur toute la périphérie du fer à cheval (45) et est conformé entre le fer à cheval (45) et le fer à griffes (48) pour recevoir une deuxième pièce d'amortissement (47).

14. Système selon la revendication 12 ou 13, caractérisé en ce que le fer à griffes interchangeable (48) est une plaque fermée (49) qui est pourvue de fers d'accouplement renflés (50) et de moyens de réglage de l'accouplement (51).

15. Système selon la revendication ou l'une des revendications suivantes, caractérisé en ce que le fer à cheval ou le support de base (54) est constitué de métal ou de métal léger et présente des surfaces d'usure avec un renflement (56) par rapport au fer à cheval et en ce que le bord à griffes renflé (56) du support de base (55) s'étend sur la partie externe du support de base et le bord à griffes se situe dans la zone de clouage en dehors de la ligne de clouage.

16. Système selon la revendication 1 ou l'une des revendications suivantes, caractérisé en ce que la pièce de sabot (37) présente des épaulements de fixation (40) faisant saillie vers le haut ou vers le bas sur la périphérie externe.

17. Système selon la revendication 14 ou 15, caractérisé en ce que le support de base (53) se présente avec des extrémité d'ailes élargies (52) et en ce que ces ailes du fer à cheval présentent, dans la zone d'appui, un élargissement d'au moins 5 mm par rapport à la largeur normale du fer à cheval dans la zone de la pointe du sabot.
